# NEW EUROPEAN PATENT SPECIFICATION

(11) **EP 0 241 286 B2**
(45) Date of publication and mention of the opposition decision: **09.11.1994**
(45) Mention of the grant of the patent: 11.09.1991
(21) Application number: 87303089.4
(22) Date of filing: 09.04.1987
(51) Int. Cl.: G05B 13/02

(54) **An auto-tuning controller**
Selbsteinstellender Regler
Régulateur auto-ajustable

(30) Priority: 11.04.1986 JP 84714/86; 11.04.1986 JP 84715/86; 11.04.1986 JP 84716/86; 11.04.1986 JP 84717/86; 11.04.1986 JP 84718/86
(43) Date of publication of application: 14.10.1987
(73) Proprietor: MITSUBISHI DENKI KABUSHIKI KAISHA, Tokyo 100 (JP)
(72) Inventor: Nomoto, Kohei Mitsubishi Denki K.K., Kamakura-shi Kanagawa-ken (JP); Kirimoto, Tetsuo Mitsubishi Denki K.K., Kamakura-shi Kanagawa-ken (JP); Kondo, Michimasa Mitsubishi Denki K.K., Kamakura-shi Kanagawa-ken (JP)
(74) Representative: Beresford, Keith Denis Lewis

(56) References cited:
- PROCEEDINGS OF THE 24TH IEEE CONFERENCE ON DECISION & CONTROL, IEEE CONTROL SYSTEMS SOCIETY, 11th-13th December 1985, Fort Lauderdale, Florida, vol. 1, pages 602-608, IEEE; H.R. VAN NAUTA LEMKE et al.: "Fuzzy pid supervisor"
- MEASUREMENT AND CONTROL, vol. 17, no. 11, December 1984/January 1985, pages 409-413, Dorking, GB; B. KNIGHT et al.: "The use of expert systems in industrial control"
- ISA TRANSACTIONS, vol. 20, no. 2, February 1981, pages 3-10, ISA; A.B. CORRIPIO et al.: "Industrial application of a self-tuning feedback control algorithm"
- IEEE TRANSACTIONS ON SYSTEMS, MAN, AND CYBERNETICS, vol. SMC-15, no. 1, January/February 1985, pages 175-189, IEEE; J. MAIERS et al.: "Applications of fuzzy set theory"
- Article of Kurz et al. "Development, Comparison and Application of Various Parameter-Adaptive Digital Control Algorithms", published by IFAC, Helsinki, Finland, June 1978, pages 443-453
- "Automatisierungstechnik", Article of Jakoby, "Diskrete adaptive Regler - Versuch einer Einordnung", 1985, pages 6-13
- "Zmsr" 5(1962), Article of Langhoff, "Extremwertregelung", pages 489-492
- Book of A. Schöne, Prozessrechensysteme", 1981, pages 599-606
- Information Sciences 36,1985,page 72,"An Introductory Survey of Fuzzy Control" by M.Sugeno
- "A retrospective view of Fuzzy Control Systems" by Richard M.Tong,published in Fuzzy Sets and Systems,14,(1984) pages 199-210

## Description

The present invention relates to an auto-tuning control apparatus provided with a function of automatically adjusting one or more control parameters in accordance with the characteristics of a controlled system and which may be used, for example, for conducting process control.

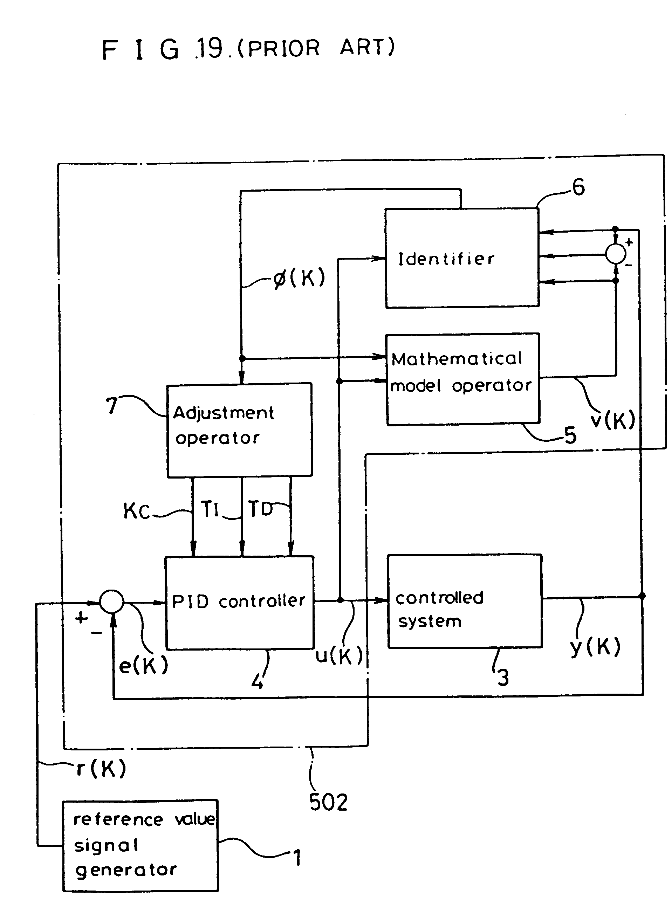

Conventionally, an auto-tuning controller such as shown in Figure 19 is adopted. This is one recited in an article by A.B. Corripio, P.M. Tompkins, "Industrial Application of a Self-Tuning Feedback Control Algorithm", ISA Transactions, vol. 20, No. 2,1981, pp 3 to 10. In Figure 19, the reference numeral 1 designates a reference value signal generator, the reference numeral 502 designates an auto-tuning controller, the reference numeral 3 designates a controlled system, the reference numeral 4 designates a PID controller, the reference numeral 5 designates a mathematical model operator, the reference numeral 6 designates an identifier, and the Reference numeral 7 designates an adjustment operator.

The operation of this device will be described.

The auto-tuning controller 502 receives the reference value signal r(k) which is output from the reference value signal generator 1 and the controlled variable y(k) which is output from the controlled system 3 as its inputs, and outputs a manipulated variable u(k) which is to be input to the controlled system 3. The values in parenthesis represent discrete timings at respective sampling invervals.

The operation inside the auto-tuning controller is as described below.

At first, an error e(k) between the reference value signal r(k) and the controlled variable y(k) is calculated.

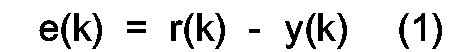

The PID controller 4 receives the error e(k) as its input, and calculates the manipulated variable u(k) with the use of the control parameters which are previously established to output the same. The control parameters in the PID controller 4 are the gain K_{c}, integration time T, and differentiation time T_{D}, and the manipulated variable u(k) is calculated from these parameters as in the following.

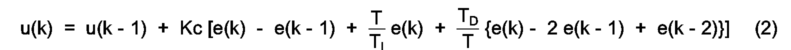

The manipulated variable u(k) becomes the input to the controlled system 3 as well as the inputs to the mathematical model operator 5 and the identifier 6.

The mathematical model operator 5 calculates the output v(k) from the input manipulated variable u(k), for example, with the use of such as the mathematcial model of the following formula.

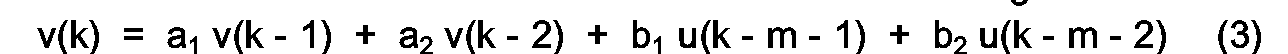

Herein, m is an integer larger than or equal to 0, which means a dead time.

The identifier 6 obtains the coefficients a₁, a₂, b₁, and b₂ of the formula (3) such that the input-output relation of the controlled system 3 and that of the mathematical model operator 5 are equivalent to each other, that is, the outputs y(k) and v(k) of the both circuits are equal to each other. For this purpose, the identifier 6 receives the manipulated variable u(k), the controlled variable y(k), and the output of the mathematical model v(k) as its inputs.

For the description of the operation of the identifier 6, the following vectors x(k), z(k), and ø(k) are defined.

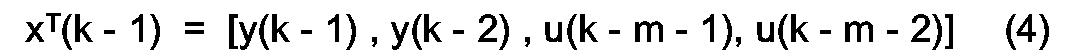

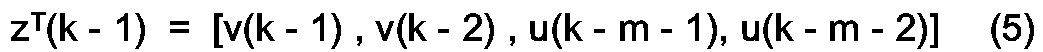

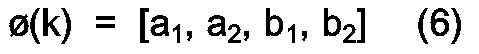

Herein, the suffix T at right shoulder of the vector represents a transpose of the vector.

The identifier 6 executes the next algorithm.

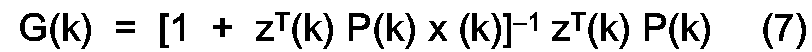

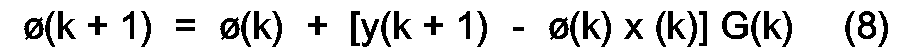

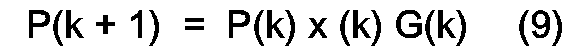

The vector ø(k), that is, the coefficients a₁, a₂, b₁, and b₂ of the mathematical model formula (3) are obtained successively by this algorithm.

The vector ø(k) which is obtained in this way is output from the identifier 6, and is sent to the mathematical model operator 5 to be used for modifying the mathematical model, and is sent to the adjustment operator 7 to be used for obtaining the control parameters, that is, the gain K_{c}, integration time T, and differentiation time T_{D}. The adjustment operator 7 conducts the following operation in order to obtain these control parameters.

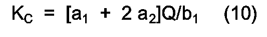

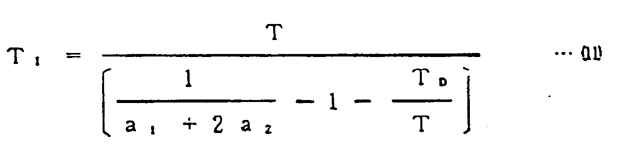

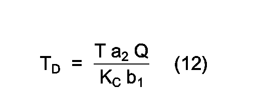

Herein, Q which appears in the formulae (10) and (12) are defined by the following formula.

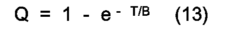

Herein, 8 is an adjustment parameter, and in more detail, a desired time constant in a dosed loop.

The gain K_{c}, integration time T , and differentiation time To obtained in this way are sent to the PID controller 4 to be again used for calculating the manipulated variable u(k) from the error e(k) with using the formula (2).

In this prior art auto-tuning controller with such a construction it is required to conduct the identification of the controlled system, and there are following problems in this identification.

(1) The calculation is very complicated.
(2) The quantity of the calculation amounts to a large volume.
(3) It takes a long time for the calculation to converge.
(4) It is impossible to deal with the non-linearity which is possesed by the controlled system.
(5) This controller is improperforthe identification of the controlled system of the type other than that which is determined by the mathematical model of the formula (3) because the type of the mathematical model is restricted to that of the formula (3) in this controller.
(6) There arises redundancy because the four coefficients a₁, a₂, b₁, and b₂ are identified in order to obtain the three control parameters Kp, T, and Tp.

Mention is made here of an article entitled "Fuzzy PID Supervisor" by H.R. van Nauta Lemke et al which appeared in the Proceedings of the 24th IEEE Conference on Decision & Control, 11th-13th December 1985, pages 602-608. An auto-tuning control apparatus is described in which fuzzy logic is applied to the control of a PID controller. This is based upon the extraction of an error signal which is formed in the apparatus as the difference between a process monitoring variable and a reference signal. This error signal is passed through a differentiator and both the differentiated output signal produced and the error signal are utilised by the Fuzzy PID Supervisor. These signals are scaled and sampled. Then follows fuzification, application of fuzzy rules, and defuzzification, in course of producing increments for adjusting the PID control parameters.

The present invention is intended to provide an auto-tuning controller capable of generating optimum control parameters of the controlled system from characteristics variables which are extracted from the waveform of an errorsignal using fuzzy reasoning rules previously obtained from experience and human perception without any need to conduct model identification of the controlled system.

This intention is realized by implementing the features of claim 1.

The error signal upon which the characteristics variables extractor operates may be one derived within the controller external to the extractor. Altematively, the error signal may be derived within the extractor from other signals - e.g. from the output controlled variable and an applied reference signal, or alternatively from the output controlled variable and a test signal applied either directly or indirectly to the controlled system.

The samples of the error signal waveform may be regular samples. Such may be used for deriving mean error and/or mean error change rate. Additionally or alternatively the samples may be feature dependant and obtained at irregular time intervals - e.g. they may be peak value samples.

In the accompanying drawings:
Figure 1 is a block diagram showing an auto-tuning controller as a first embodiment of the present invention;
Figure 2 is a flowchart describing the operation of the first embodiment;
Figure 3 is a diagram showing an example of evaluation by the membership function thereof;
Figure 4 is a diagram showing the mechanism of the fuzzy reasoning thereof;
Figure 5 is a block diagram showing an auto-tuning controller as a second embodiment of the present invention;
Figure 6 is a flowchart describing the operation of the second embodiment;
Figure 7 is a diagram showing an example of evaluation by the membership function thereof;
Figure 8 is a diagram showing the mechanism of the fuzzy reasoning thereof;
Figure 9 is a block diagram showing an auto-tuning controller as a third embodiment of the present invention;
Figure 10 is a flowchart describing the operation of the third embodiment;
Figure 11 is a diagram showing an example of evaluation by the membership function thereof;
Figure 12 is a diagram showing the mechanism of the fuzzy reasoning thereof;
Figure 13 is a block diagram showing a fourth embodiment of the present invention;
Figure 14 is a flowchart describing the operation of the fourth embodiment;
Figure 15 is a diagram showing the mechanism of the fuzzy reasoning thereof;
Figure 16 is a blocs diagram showing an auto-tuning controller as a fifth embodiment of the present invention;
Figure 17 is a flowchart describing the operation of the fifth embodiment;
Figure 18 is a diagram showing the mechanism of the fuzzy reasoning thereof; and
Figure 19 is a block diagram showing a prior art auto-tuning controller.

In order that this invention might be better understood, embodiments thereof will now be particularised and reference will be made to the drawings aforesaid. The description that follows is given by way of example only.

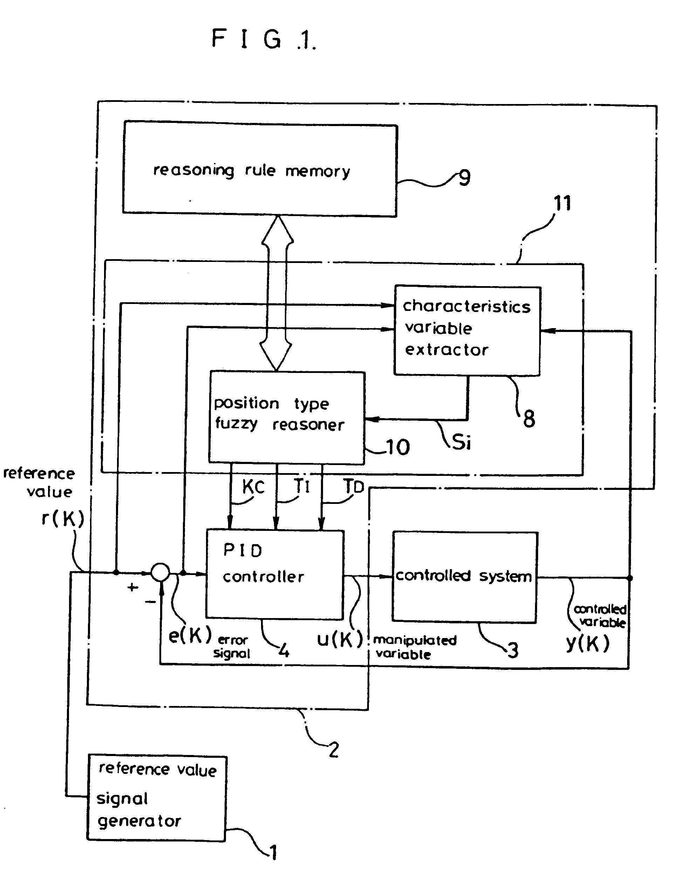

Figure 1 shows an auto-tuning controller as a first embodiment of the present invention. In Figure 1, the reference numeral 1 designates a reference value signal generator, which generates a reference value signal r(k). The reference numeral 2 designates an auto-tuning controller, and this auto-tuning controller receives the reference value signal r(K) and the controlled variable y(k) which is the output of the controlled system 3, and outputs the manipulated variable u(k). The reference numeral 3 designates a controlled system. This controlled system 3 receives the manipulated variable u(k) and outputs the controlled variable y(k). As described above, the controlled variable y(k) is fed back to the auto-tuning controller 2.

The internal construction of the auto-tuning controller 2 will be described.

The reference numeral 4 designates a controller, and in this embodiment a PID controller is used therefor. This PID controller4 receives the error between the reference value signal r(k) and the controlled variable y(k), and outputs the manipulated variable u(k) in accordance with the previously established control parameters, that is, the gain K_{c}, integration time T, and differentiation time T_{D}. The reference numeral 8 designates a characteristics variables extractor which receives such as the error e(k), and/or the reference value signal r(k) and the manipulated variable y(k), and outputs the characteristics variable Sᵢ; i = 1,2,..., n representing the characteristics of the controlled system 3. The reference numeral 9 designates a reasoning rule memory which stores the reasoning rules Rⱼ ; j = 1, 2, ..., m to be used for deriving the optimum control parameters from the characteristics variables S. The reference numeral 10 designates a position type fuzzy reasoner which reasons and outputs the optimum control parameters, that is, the gain K_{c}, integration time T, and differentiation time T_{D} in accordance with the reasoning rule Rⱼ upon receiving the input characteristics variable S. The K_{c}, T, and T_{D} are given to the PID controller 4 to be used again for the calculation of the manipulated variable u(k). Thus, an adjustment section 11 for adjusting the control parameters of the controller 4 by a fuzzy reasoning in accordance with the reasoning rule is constituted by the characteristics variable extractor 8 and the position type fuzzy reasoner 10.

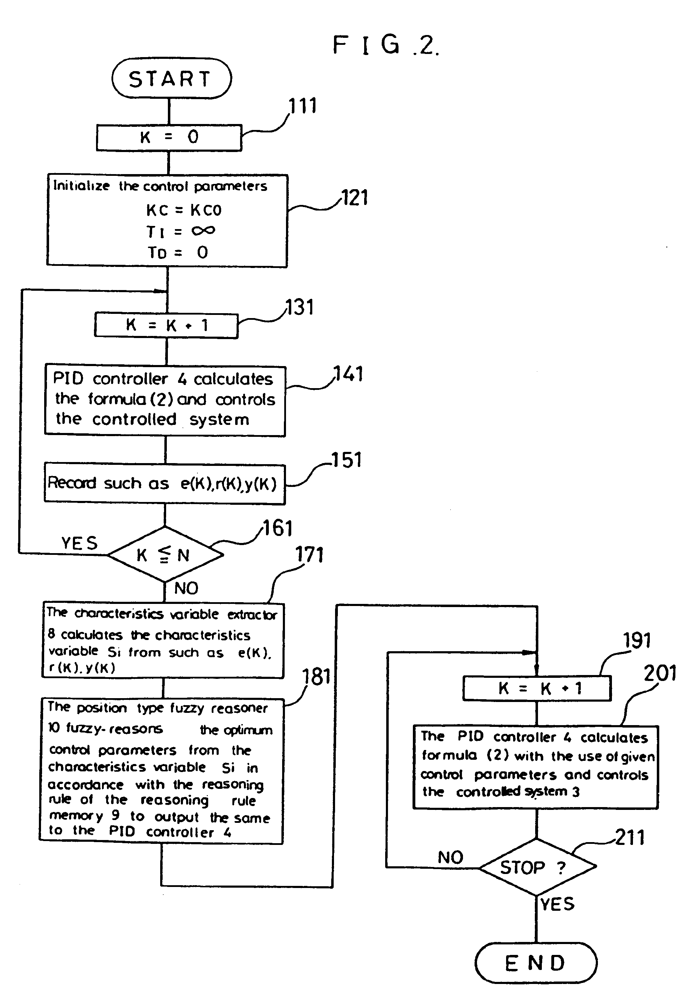

The operation of this device will be described with reference to the flowchart of Figure 2.

At first, the value of K is set to 0 at step 111, Next, the control parameters are initiallized at step 121 as in the following. That is, the gain K_{c} is initiallized at a relatively small value K_{co}. The integration time T and differentiation time T_{D} are initiallized at infinity and 0, respectively, or at maximum and minimum, respectively. The PID controller 4 calculates the formula (2) with the use of the above-described initiallized parameters and controls the controlled system 3. Meanwhile, such as the error e(k), the reference value signal r(k), or the controlled variable y(k) are recorded.

When these data are gathered over n samples, the characteristics variable extractor 8 calculates the characteristics variable Sᵢ; i = 1, 2, ..., n from these data. The above-described characteristics variables are as described below.

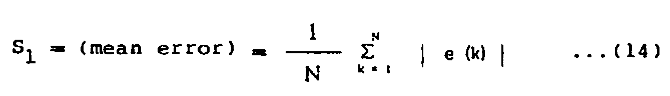

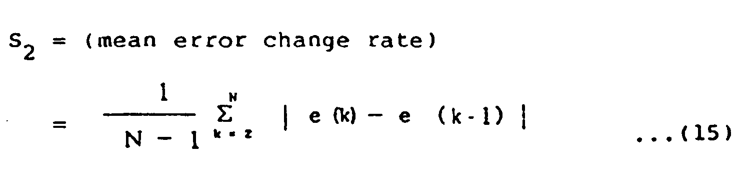

At step 181 the position type fuzzy reasoner 10 fuzzy reasons the optimum control parameters from the characteristics variable in accordance with the reasoning rules Rⱼ ; j = 1, 2, ..., m stored at the reasoning rule memory 9, and outputs the same to the PID controller 4.

Thereafter, at steps 191 to 201 the PID controller 4 calculates the formula (2) with the use of the control parameters given described above and continues the control of the controlled system 3.

The reasoning rule Rⱼ stored at the reasoning rule memory 9 and the operation of the position type fuzzy reasoner 10 will be described.

At first, the reasoning rules Rⱼ are those produced by that the experience rules or perceptions which a person utilizes in conducting the adjustment of control parameters are made rules, and these are, for example, as in the following.
R₁: "If the mean error S₁ is large and the mean error change rate S₂ is large, then set the gain K_{c} at an intermediate value."
R₂: "If the mean error S₁ is large and the mean error change rate S₂ is small, then set the gain K_{c} at a large value."

As described above, the reasoning rule Rⱼ has a form of "If~, then ~.". The portion "If ~," is called a former part proposition, and the portion "then -." is called a latter part proposition.

When the latter part proposition has a form of representing a value itself such as "take - as -" or "set - to ~" as in the above-described reasoning rules R₁ and R₂, this fuzzy reasoning is especially called a position type fuzzy reasoning. To the contrary, when the latter part proposition has a form of representing a variation of a value such as "increase - by ~" or "lengthen - by ~", this fuzzy reasoning is caller a velocity type fuzzy reasoning.

In this first embodiment of the present invention, the position type fuzzy reasoner 10 which conducts the position type fuzzy reasoning is provided. The operation of this position type fuzzy reasoner 10 will be described as follows.

In the fuzzy reasoning, at first it is evaluated how much degree the present state satisfies with the condition of the former part proposition with the use of the membership function, and it is represented by a value between 0 and 1.

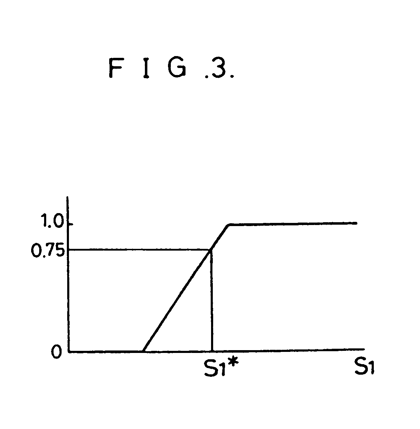

Figure 3 shows an example of evaluation by the membership function. Herein, a proposition "the mean error S₁ is large" is adopted. It is assumed that the mean error calculated by the characteristics variable extractor 8 is that S₁ = S₁*. Then, the degree to that the former part proposition comes into existence is evaluated as 0.75.

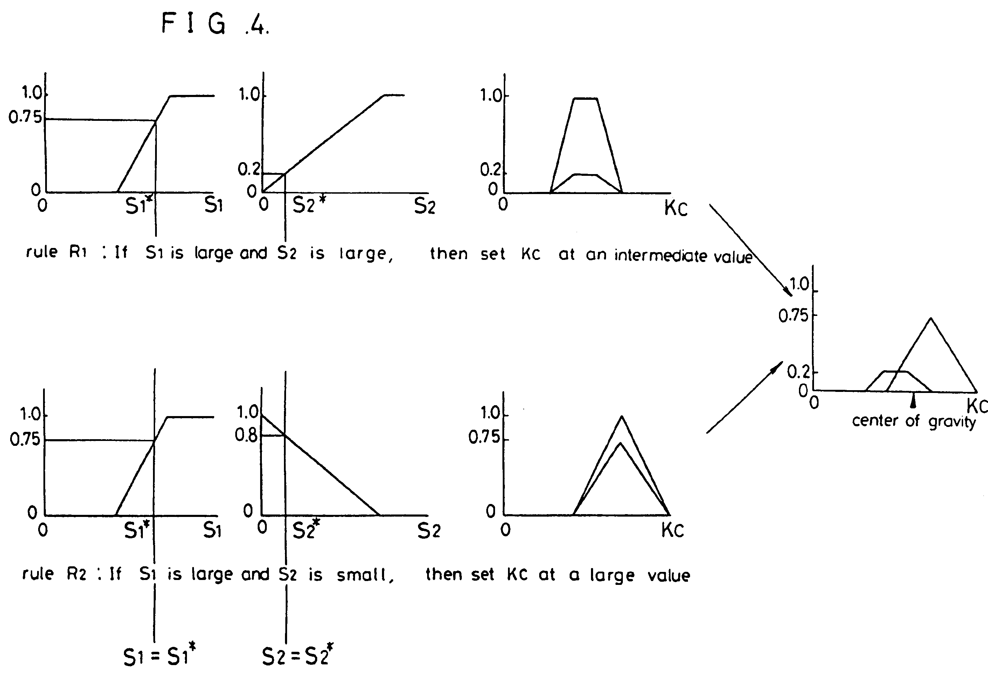

Figure 4 shows the mechanism of the fuzzy reasoning which is conducted by the position type fuzzy reasoner 10. In this fuzzy reasoning, the mean error S₁ and the mean error change rate S₂ are selected as the characteristics variables, and the above-described rules R₁ and R₂ are used as reasoning rules. Herein, only the adjustment of the gain is described, but the principle of the reasoning is also applied to the adjustments of the integration time and the differentiation time.

At first, the degrees to that the former part propositions of the fuzzy reasoning rules R1 and R2 come into existence are evaluated as described above. Herein, when the former part proposition comprises a plurality of terms and has a form of "If ~ and ~", the lowest one among the degrees to that the respective terms come into existence becomes the degree to that the entirety of the former part proposition come into existence. In the example of Figure 4, the actual values of the mean error S₁ and the mean error change rate S₂ are that S₁ = S₁* and S₂ = S₂^{*.} Then, the degree to that the proposition "If the mean error S₁ is large" of the rule R₁ comes into existence is 0.75, and the degree to that the proposition "If the mean error change rate S₂ is large" comes into existence is 0.2. Accordingly, the degree to that the entirety of the former part proposition comes into existence is 0.2.

The latter part proposition is also represented by the membership function as shown in Figure 4. Because the degree to that the former part proposition of the rule R₁ is 0.2, the membership function of the latter part proposition is reduced to 0.2 times as that of the latter part proposition itself.

Finally, the reduced membership functions of the latter part propositions of the respective rules R₁ and R₂ are put one upon another, and the center of gravity of them is obtained. The value of the gain K_{c} at this center of gravity is adopted as the optimum gain.

Similarly as above, the optimum integration time and the optimum differentiation time are reasoned.

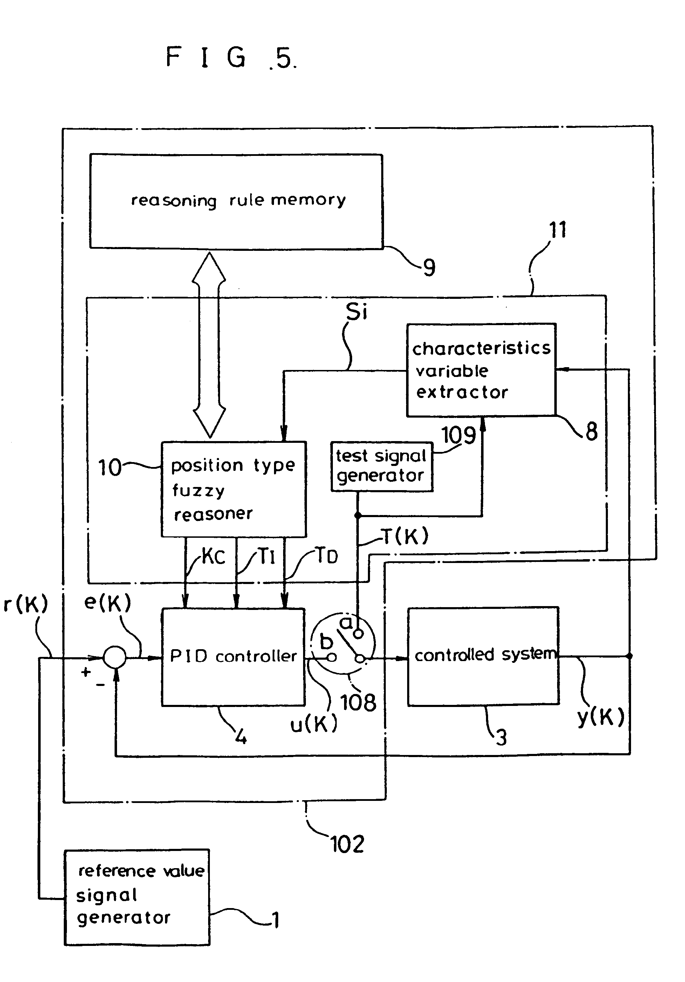

Figure 5 shows a second embodiment of the present invention.

In Figure 5 the same reference numerals designate the same elements as those shown in Figure 1. The reference numeral 108 designates a controlled system input switch for selecting one from the manipulated variable u(k) and the test signal T(k) as the input to be input to the controlled system 3. The reference numeral 109 designates a test signal generator for generating a test signal T(k). The characteristics variable extractor 8 receives the test signal T(k) and the output y(k) of the controlled system 3 which is a response against the test signal T(k), and outputs a characteristics variable S ; i = 1, 2, ..., n representing the characteristics of the controlled system 3. The reference numeral 102 designates an auto-tuning controller of this second embodiment, and the adjustment section 11 for adjusting the control parameters is constituted by the characteristics variable extractor 8, the position type fuzzy reasoner 10, and the test signal generator 109.

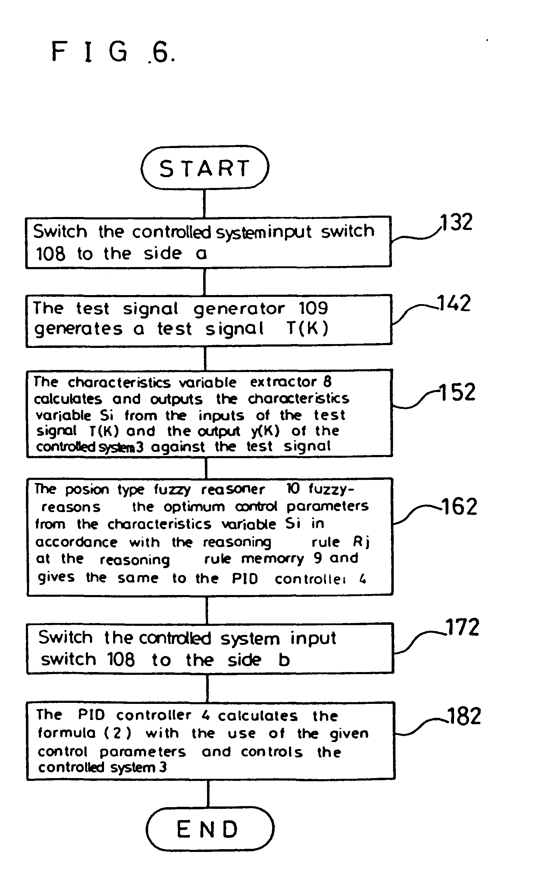

The operation of this second embodiment will be described with reference to the flowchart of Figure 6.

The operation of this embodiment is separated into a former part comprising the steps 132 to 162 of the automatic adjustment mode for conducting the automatic adjustment of the control parameters and a latter part comprising the steps 172 to 182 of the control mode for conducting the control of the controlled system 3 in accordance with the control parameters adjusted at the former part steps.

At first, the controlled system input switch 108 is switched to the side a at step 132.

Next, the test signal generator 109 generates a test signal T(k) which is a step signal in this case at step 142. The test signal T(k) becomes an input to the controlled system 3 through the controlled system input switch 108.

At step 152 the characteristics variable extractor 8 receives the test signal T(k) and the output y(k) of the controlled system 3 which is a response against the test signal, and calculates the characteristics variable S, representing the control property of the controlled system 3 and outputs the same.

At step 162, the position type fuzzy reasoner 10 fuzy-reasons the optimum control parameters from the characteristics variable S, in accordance with the reasoning rule Rⱼ stored at the reasoning rule memory 9, and gives the same to the PID controller 4.

Thus, the former part operation, that is, the automatic adjustment of the control parameters is concluded.

The latter part operation comprises the steps 172 and 182 of the control mode for conducting the control of the controlled system 3 after the adjustment of the control parameters.

At step 172, the controlled system input switch 108 is switched to the side b. Thus, the input to the controlled system 3 is switched from the test signal T(k) to the manipulated variable u(k) which is the output of the PID controller 4.

At step 182 the PID controller 4 calculates the formula (2) with the use of given control parameters and controls the controlled system 3.

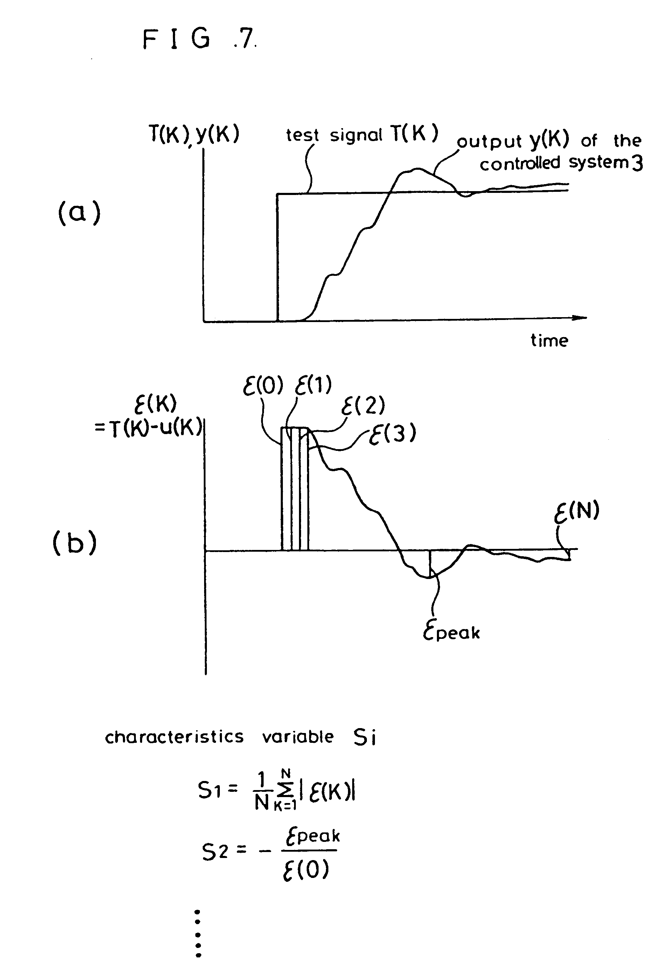

Figure 7 shows an example of fuzzy reasoning by which the characteristics variable S, is extracted from the test signal T(k) and the output y(k) of the controlled system 3 which is a response against the test signal T(k). Herein, a step signal is used as the test signal T(k). As the characteristics variable Sᵢ the followings S₁ and S₂ are, for example, selected with the use of the response error s(k) of the controlled system 3 against the test signal T(k) which is also shown below.

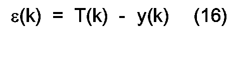

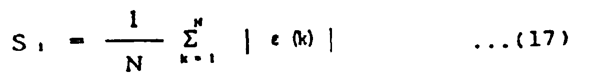

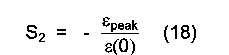

Herein, N is a positive integer which is previously established, and Speak is the maximum peak of the s(k) at the negative side.

In this second embodiment of the present invention, the position type fuzzy reasoner 8 which conducts the position type fuzzy reasoning is provided. The operation thereof will be described as follows.

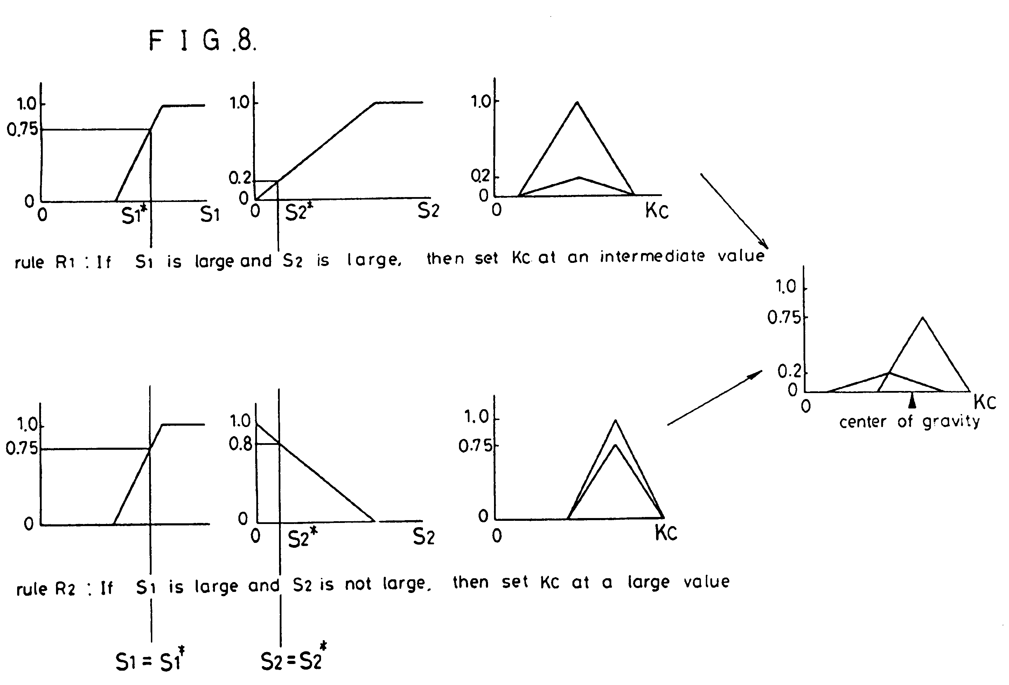

Figure 8 shows the mechanism of the position type fuzzy reasoning. Herein, the S₁ and S₂ of the formulae (17) and (18) are selected as characteristics variables, and R₁ and R₂ which are described below are used as reasoning rules.
Rᵢ : "If S₁ is large and S₂ is also large, then set the K_{c} at an intermediate value."
R₂: "If S₁ is large and S₂ is not large, then set the K_{c} at a large value."

At first it is evaluated to how much degree the present state satisfies with the condition of the former part proposition of the fuzzy reasoning rules R₁ and R₂. Herein, the actual values of S₁ and S₂ are assumed to be that Sᵢ = Sᵢ^{*} and S₂ = S₂^{*.} These values are evaluated by the membership functions. For example, with respect to the reasoning rule R₁, if S₁ is large and S₂ is also large as shown by the left side two graphs at the upper stage of Figure 8 it is evaluated that the present state satisfies them to the degree of 0.75 and 0.2, respectively. Then, it is judged that the former part proposition of the rule R₁ is satisfied to the degree of 0,2 from the lower value among them.

The latter part proposition "set the K_{c} at an intermediate value" is also represented by a membership function, and this membership function is weighted by the degree to that the former part proposition comes into existence.

Finally, the weighted membership functions of the latter part propositions of the respective rules R₁ and R₂ are put one upon another and the center of gravity of them is obtained. The value of the gain K_{c} of this center of gravity is adopted as the optimum gain.

Similar operations as those described above are conducted also for the integration time and differentiation time.

In this way, the position type fuzzy reasoner 10 reasons the optimum control parameters.

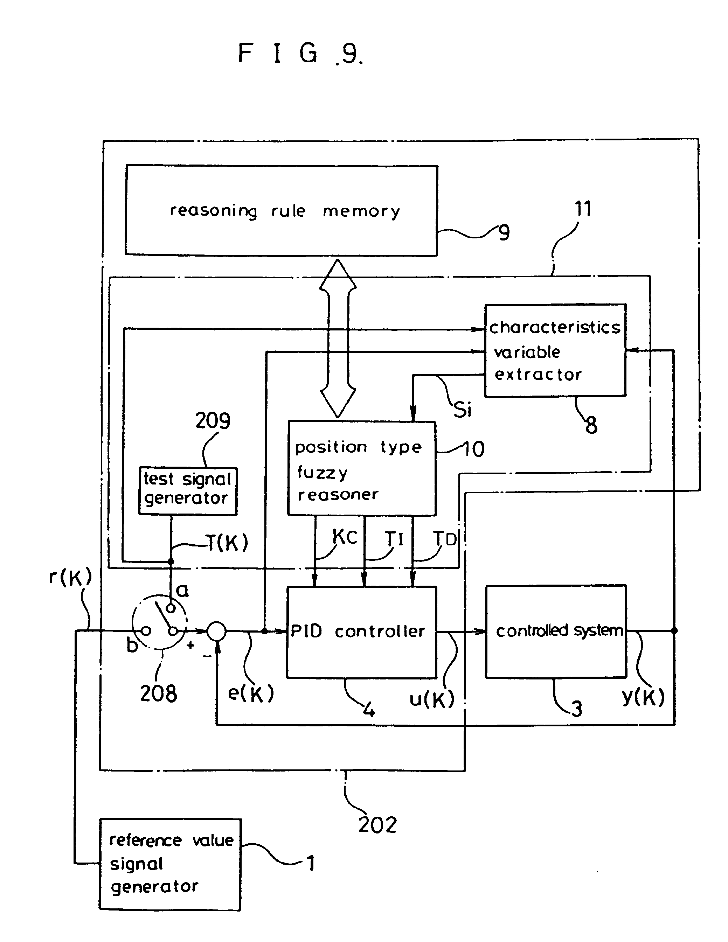

Figure 9 shows a third embodiment of the present invention. In Figure 9 the same reference numerals designates the same elements as those shown in Figures 1 and 5. In this embodiment, an error switch 208 is provided at a stage prior to the PID controller 4 so as to select one as error input e(k) which is to be input to the PID controller 4 from the error between the reference value signal r(k) and the output y(k) of the controlled system 3 and the error between the test signal T(k) from the test signal generator 209 and the output y(k). Furthermore, the auto-tuning controller 202 of this third embodiment receives the reference value signal r(k) and the controlled variable y(k) which is the output of the controlled system 3 as its inputs, and outputs manipulated variable u(k). The output y(k) of the controlled system 3 is feedbacked to the auto-tuning controller 202. In this embodiment the adjustment section 11 for adjusting the control parameters are constituted by the characteristics variable extractor 8, the position type fuzzy reasoner 10, and the test signal generator 209.

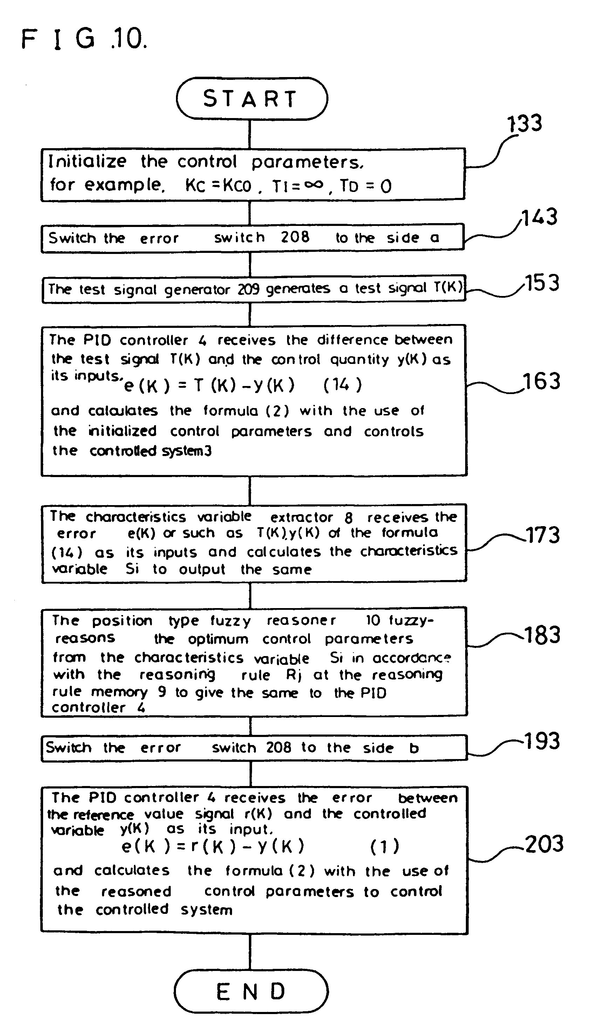

The operation of this third embodiment will be described with reference to the flowchart of Figure 10.

In this flowchart, the former part steps 133 to 183 constitute an automatic adjustment mode for conducting the automatic adjustment of the control parameters, and the latter part steps 193 and 203 constitute a control mode for conducting the control of the controlled system in accordance with the control parameters adjusted at the former part steps.

At first, at step 133 the control parameters are initiallized at appropriate values. For example, the gain K_{c} is set at a relatively small value K_{co}, the integration time T₁ and differentiation time To are set at infinity and 0, or at maximum and minimum, respectively.

At steps 143 to 163 the PID controller4 receives the error e(k) between the test signal T(k) which is a pulse sianal in this case and the controlled variable v(k). 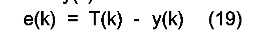 as its inputs. That is, the PID controller 4 controls the controlled system 3 in accordance with the test signal T(k) with the use of the initiallized control parameters.

At step 173 the characteristics variable extractor 8 receives the error e(k) of the formula (17), and T(k), y(k) as its inputs, and calculates the characteristics variable S, representing the control property of the controlled system 3 to output the same.

At step 183, the position type fuzzy reasoner 10 reasons the optimum control parameters from the characteristics variable S, in accordance with the reasoning rule Rⱼ stored at the reasoning rule memory 9, and gives the same to the PID controller 4.

Having done the above-described steps, the operation of the automatic adjustment of control parameters, that is, the adjustment mode is concluded.

At step 193 the auto-tuning controller enters the control mode for controlling the controlled system 3 in accordance with the reference value signal r(k), and at step 203 the main operation of the control mode is conducted.

The characteristics variable Sᵢ which is output from the characteristics variable extractor 8, the reasoning rule Rⱼ stored at the reasoning rule memory 9, and the position type fuzzy reasoning conducted by the position type fuzzy reasoner 10 will be described. Herein, the automatic adjustment of the gain only is described for simplification.

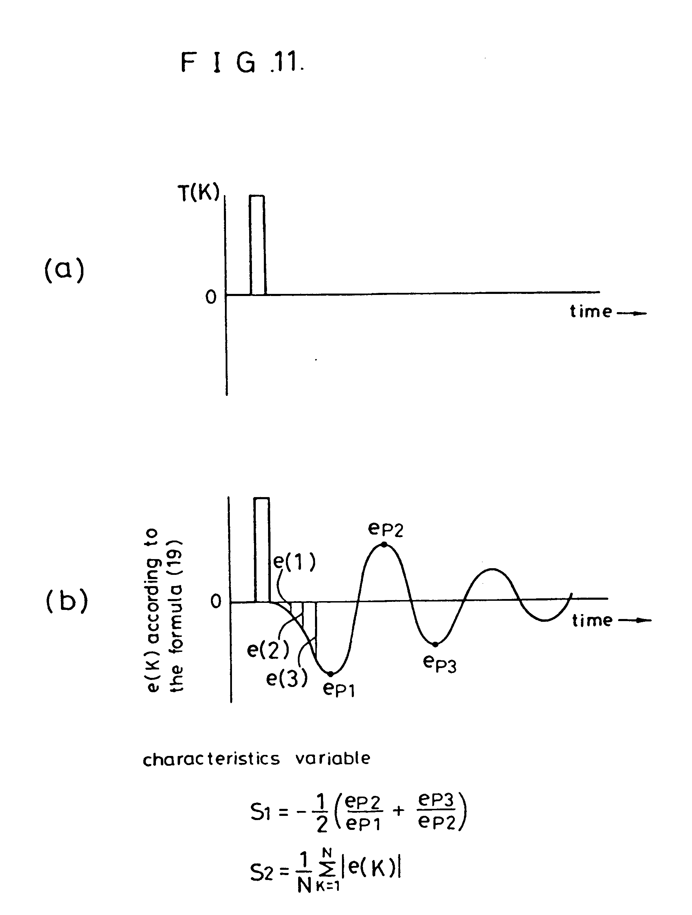

It is assumed that a pulse signal shown in the graph at the upper stage of Figure 11 is used as the test signal T(k). In this case the error e(k) between the test signal and the controlled variable according to the formula (19) becomes as shown in the graph at the lower stage of Figure 11. From the characteristics of the waveform of the error e(k) the characteristics variables Sᵢ are obtained, for example, as follows.

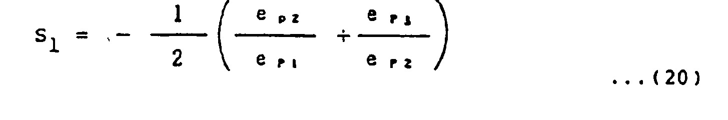

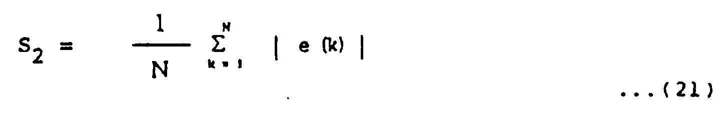

Herein, eₚ₁, ep₂, and ep₃ designate the negative, positive, and negative peak value which appear after the test signal, respectively, and the e(I), ..., e(N) designate errors from after the test signal un to a predetermined time thereafter.

In this third embodiment of the present invention, the position type fuzzy reasoner 8 which conducts the position type fuzzy reasoning is provided. The operation thereof will be described as follows.

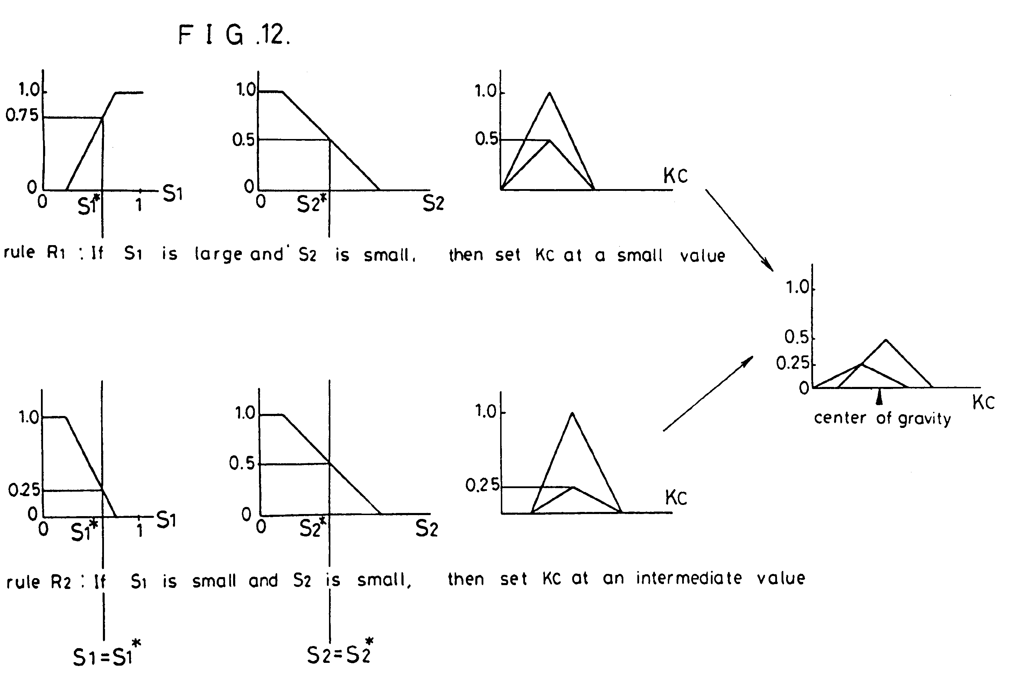

Figure 12 shows the mechanism of this position type fuzzy reasoning. Herein, the S₁ and S₂ of the above-described formulae (20) and (21) are selected as characteristics variables, and R₁ and R₂ which are described below are used as reasoning rules.
Rᵢ : "If S₁ is large and S₂ is small, then set the K_{c} at a small value."
R₂: "If S₁ is small and S₂ is also small, then set the K_{c} at an intermediate value."

At first, it is evaluated to how much degree the present state satisfies with the condition of the former part proposition of the fuzzy reasoning rule. Herein, it is assumed that the values of S₁ and S₂ are actually to be such that S₁ = Sᵢ^{*} and S₂ = S₂^{*}, respectively. These values are evaluated by the membership functions. For example, with respect to the reasoning rule R₁, the propositions "S₁ is large" and "S₂ is small" are evaluated to be satisfied with to the degree of 0.75 and 0.5, respectively, as shown in the left side two graphs at the upper stage of Figure 12. Then, it is assumed that the entirety of the former part proposition of the rule R₁ is satisfied with to the degree of 0.5 from the lower value among them.

Next, thy membership function of the latter part proposition "then set K_{c} at a small value" is weighted by the degree of 0.5 to that the former part proposition is satisfied with. This manner is shown in the third from the left graph at the upper stage of Figure 12.

Finally, the weighted membership functions of the latter part propositions of the respective rules R₁ and R₂ are put one upon another so as to calculate the center of gravity. The value of the gain K_{c} at the center of gravity is adopted as the optimum gain.

The integration time and differentiation time are also reasoned as similarly above, and the optimum control parameters are reasoned in this way by the position type fuzzy reasoner 10,

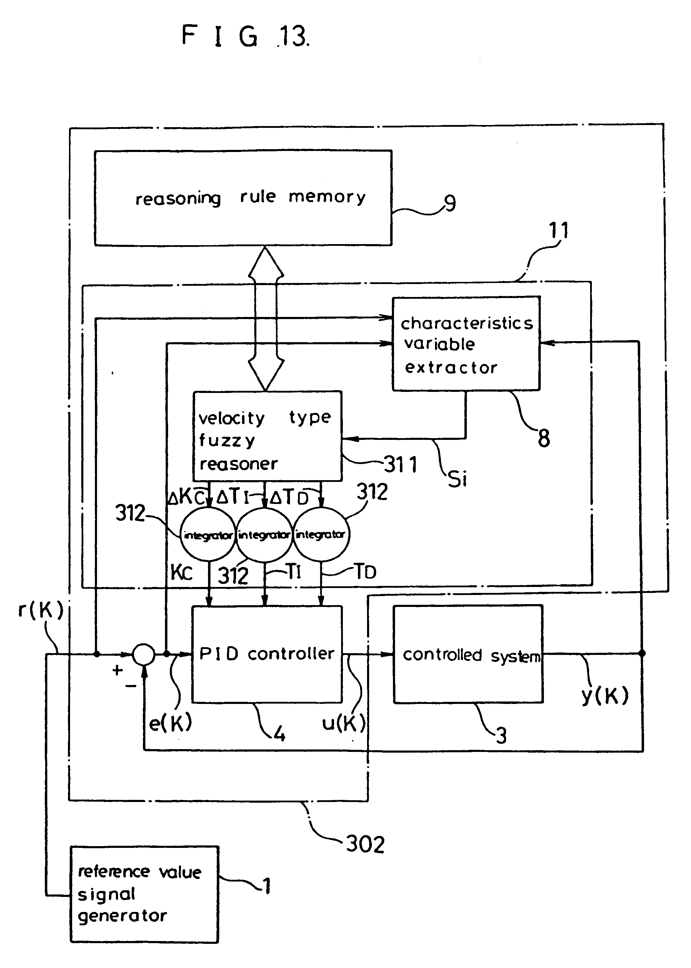

Figure 13 shows a fourth embodiment of the present invention. In Figure 13 the same reference numerals designate the same or corresponding elements as those shown in Figures 1, 5, and 9.

The internal construction of the adjustment section 11 for adjusting the control parameters of this embodiment will be described. The reference character 8 designates a characteristics variable extractor which has the same or similar function as that of the above-described embodiments. The reference numeral 311 designates a velocity type fuzzy reasoner which receives the characteristics variable Sᵢ as its input and reasons how much the control parameters, that is, the gain K_{c}, integration time T, and differentiation time To should be adjusted from their present values in order to optimize the same, and outputs the adjustment variable ΔK_{c}, ΔT_{I}, and ΔT_{D}. The reference numeral 312 designates an integrator which receives ΔK_{C}, ΔT_{I}, or ΔT_{D} as its input, and integrates the same to output it as an actual parameter. The control parameters output from the integrator 312 are given to the controller 4 to be used for calculating the manipulated variable u(k) from the error e(k). The reference numeral 302 designates an auto-tuning controller of this fourth embodiment.

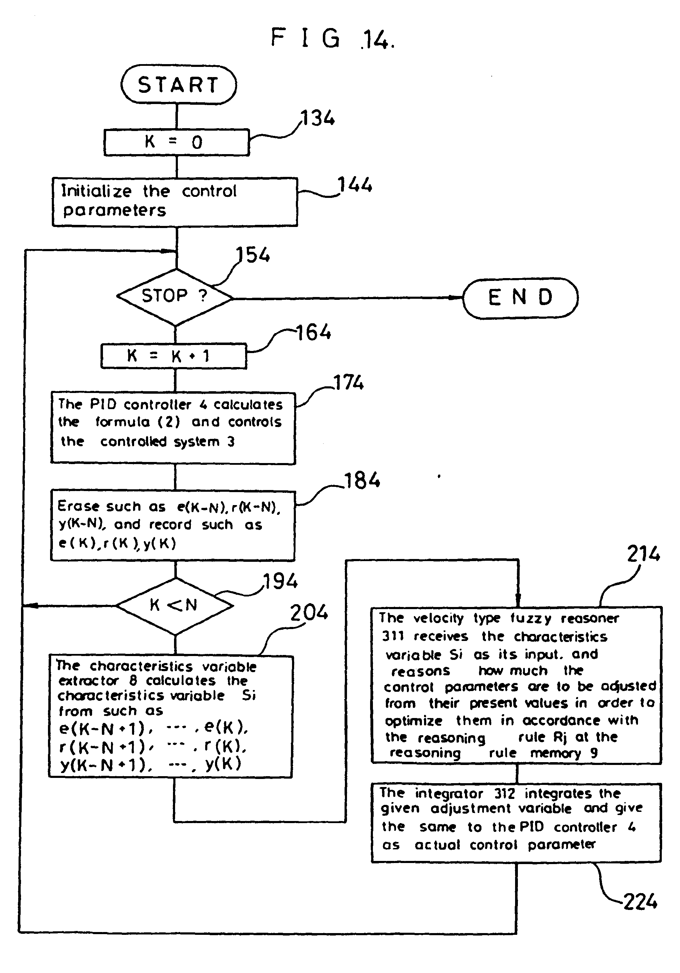

The operation of this fourth embodiment will be described with reference to the flowchart of Figure 14.

In an auto-tuning controller using a velocity type fuzzy reasoner the automatic adjustment can be conducted at an arbitrary time in conducting the control. In this place an example in which the automatic adjustment is always conducted during the control operation is shown.

At first, the value of K is set to 0 at step 134. Next, the control parameters are initiallized at step 144. The values are set at sufficiently safety values in view of the stability rather than in view of the response and the preciseness.

Until it is judged that the control system is to be stopped, the auto-tuning controller of this embodiment repeats the operation of the steps 164 to 224.

At step 174 the PID controller 4 calculates the formula (2) with the use of the present control parameters and controls the controlled system 3.

Accompanying with this. such as the error e(k - N), the manipulated variable u(k - N), and the controlled variable y(k - N) at the timing before N pieces of timings are erased, and new respective data e(k), u(k), and y(k) are recorded.

At step 194 it is judged as to whether the above-described data e(.), u(.), and y(.) are collected over N samples or not. Until the collection of the data is completed the step returns to the prior step 15.

At step 204 the characteristics variable extractor 8 calculates the characteristics variable S : i = 1, 2, ..., n from the over N samples collected data e(k - N + 1), ..., e(k), r(k - N + 1), ..., r(k), y(k - N - 1), ..., y(k). As the characteristics variables Sᵢ the mean error S₁ and the mean error change rate S₂ which are represented by the formulae (14) and (15) are used.

At step 214 the velocity type fuzzy reasoner 11 receives the input characteristics variable Sᵢ, and reasons how much the control parameters should be adjusted from the present values in order to optimize the control parameters in accordance with the reasoning rule Rⱼ : j = 1, 2, ..., m stored at the reasoning rule memory 8, and outputs the values, that is, the adjustment variable of the gain ΔK_{C}, the adjustment variable of the integration time ΔT_{I}, and the adjustment variable of the differentiation time ΔT_{D}.

At step 224 the integrators 312 integrate the input adjustment variables ΔK_{c}, ΔT_{I}, and ΔT_{D}, respectively. and output the actual control parameters K_{c}, T_{I}, and T_{D} to the PID controller 4.

The auto-tuning controller 302 controls the controlled system 3 with automatically adjusting the control parameters by repeating the above-described operations.

In this fourth embodiment of the present invention, the velocity type fuzzy reasoner 311 which conducts the velocity type fuzzy reasoning is provided. The operation thereof will be described as follows.

In the fuzzy reasoning it is evaluated to how much degree the present state satisfies with the condition of the former part proposition with the use of the membership function, and it is represented by a value between 0 and 1 as already shown in Figure 3.

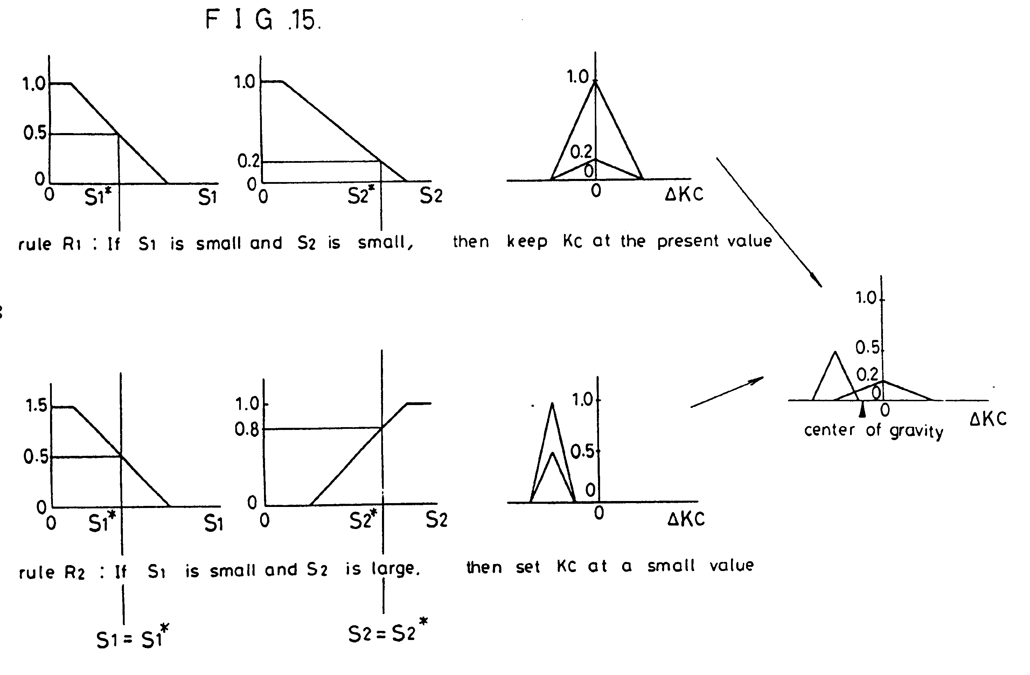

Figure 15 shows the mechanism of reasoning conducted by the velocity type fuzzy reasoner 11. Herein, the mean error S₁ and the mean error change rate S₂ are selected as characteristics variables, and R₁ and R₂ which are described below and shown in Figure 15 are used as reasoning rules.
R₁: "If S₁ is small and S₂ is also small, then keep the K_{c} at the present value."
R₂: "If S₁ is small and S₂ is large, then set the K_{c} at a small value."

In this place only the adjustment of the gain is described for simplification.

At first, the degrees to that the former part propositions of the fuzzy reasoning rules R₁ and R₂ come into existence are evaluated as described above. In the example of Figure 15 the proposition "If S₁ is small" of the rule R₁ comes into existence to the degree of 0,5, and the proposition "S₂ is also small" of the rule R₁ comes into existence to the degree of 0,2. It is judged that the entirety of the former part proposition of the rule R₁ comes into existence to the degree of 0,2 from the lower one among the two degrees.

The latter part proposition is also represented by the membership function. This membership function is weighted by the degree to that the former part proposition comes into existence. In the rule R₁ the latter part proposition is weighted to 0.2 times as that.

Finally, the weighted membership functions of the latter part propositions of the respective rules are put one upon another, and the center of gravity of them is calculated. The gain K_{c} at this center of gravity is adopted as the optimum gain adjustment variable ΔK_{C}.

Similarly as above the optimum integration time adjustment variable ΔT_{I} and the optimum differentiation time adjustment variable ΔT_{D} are reasoned.

The velocity type fuzzy reasoner 311 reasons the optimum adjustment variables of the control parameters as described above, and these values are given to the controller 4 as actual control parameters through the integrators 312.

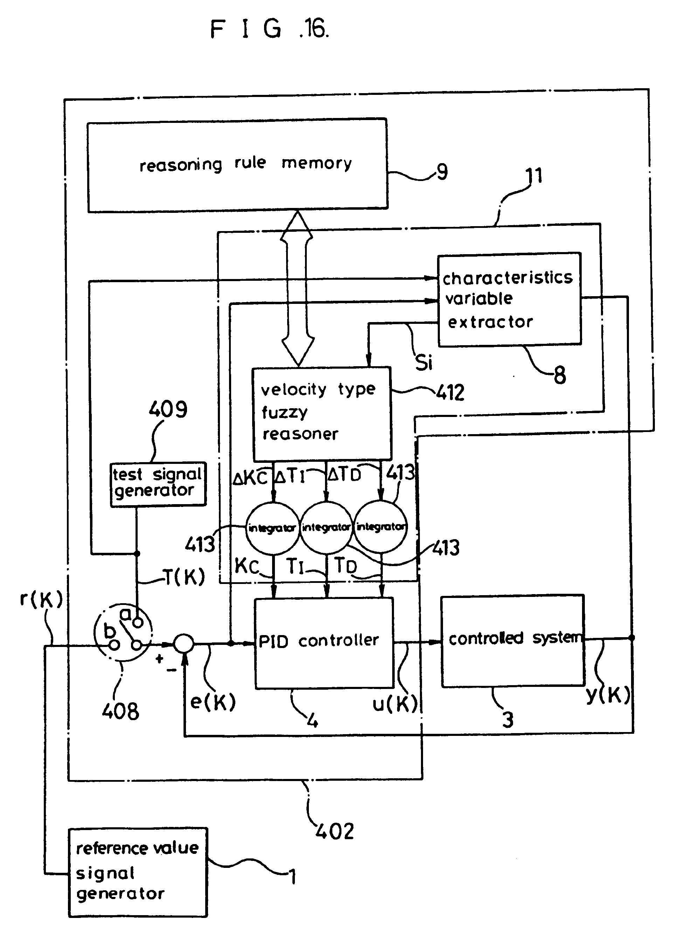

Figure 16 shows a fifth embodiment of the present invention. In Figure 16 the same reference numerals designate the same elements as those shown in Figures 1, 5, 9, and 13. In this fifth embodiment an error switch 408 is provided at a stage prior to the PID controller 4 so as to select one as error input e(k) which is to be input to the PID controller 4 from the error between the reference value signal r(k) and the output y(k) of the controlled system 3 and the error between the test signal t(k) from the test signal generator 409 and the output y(k). Furthermore, the auto-tuning controller 402 of this fifth embodiment receives the reference value signal r(k) and the controlled variable y(k) which is the output of the controlled system 3 as it inputs, and outputs manipulated variable u(k). The output y(k) of the controlled system 3 is feedbacked to the auto-tuning controller 402. In this embodiment the adjustment section for adjusting the control parameters is constituted by the characteristics variable extractor 8, the velocity type fuzzy reasoner 412, and the test signal generator 409.

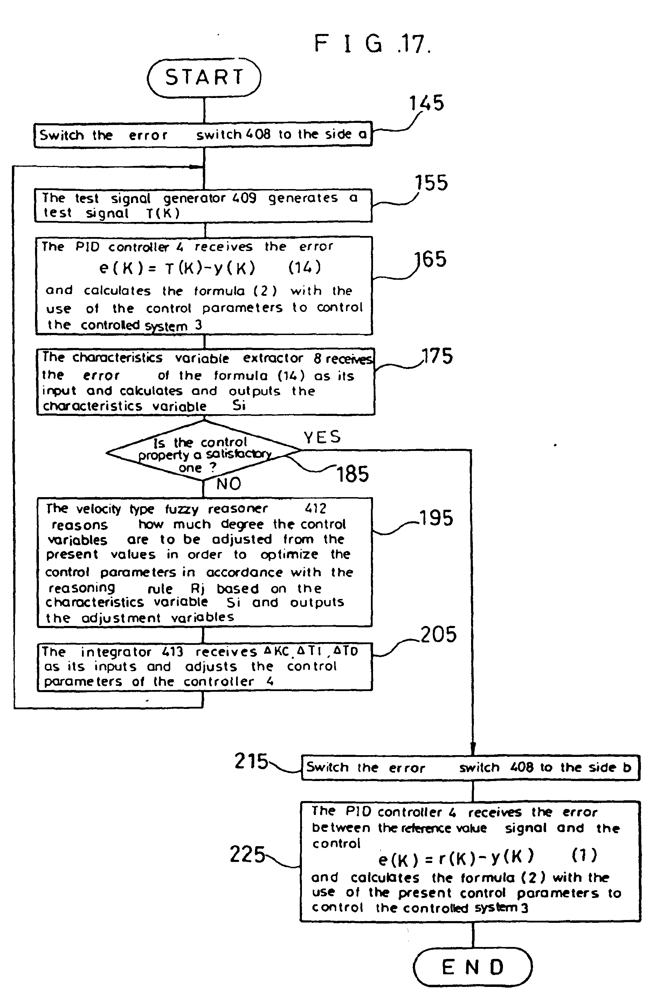

The operation of this fifth embodiment will be described with reference to the flowchart of Figure 17.

The operation of this fifth embodiment is separated into the former part steps 145 to 205 of the automatic adjustment mode for conducting the automatic adjustment of the control parameters and the latter part steps 215 and 225 of the control mode for conducting the usual control in accordance with the control parameters adjusted at the above-described former part steps.

At first, at step 145 the error switch 8 is switched to the side a so as to enter the adjustment mode.

At steps 155 to 175 the PID controller 4 receives the error between the test signal T(k) and the controlled variable y(k) as its input 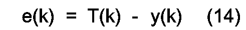 and controls the controlled system 3. Meanwhile, the characteristics variable extractor 10 receives such as e(k) as its input, and calculates and outputs the characteristics variable S.

At step 185 it is judged whether the control property of the control system at present is a satisfactory one or not from the characteristics variable S.

When the control property at present is not a satisfactory one, the step proceeds to the steps 195 and 205, and the velocity type fuzzy reasoner 12 reasons how much the control parameters should be adjusted in order to make the control property a satisfactory one. Then, the integrator 413 adds the adjustment variable to the present value of the control parameter and gives the result to the controller 4.

Thereafter, the step again returns to the prior step 155 and the above-described operation is repeated.

On the other hand, when the control property at present is judged to be a satisfactory one at step 185 the step proceeds to the steps 215 to 225.

At step 215 the mode is switched from the adjustment mode to the control mode. At step 225 the device is in a usual control mode and the controller conducts the control of the controlled system 3 in accordance with the reference value signal r(k).

The characteristics variable Sᵢ which is output from the characteristics variable extractor 10, the reasoning rule Rⱼ stored at the reasoning rule memory 11, and the velocity type fuzzy reasoning conducted by the velocity type fuzzy reasoner 12 will be described. Herein, only the adjustment of the gain will be described for simplification.

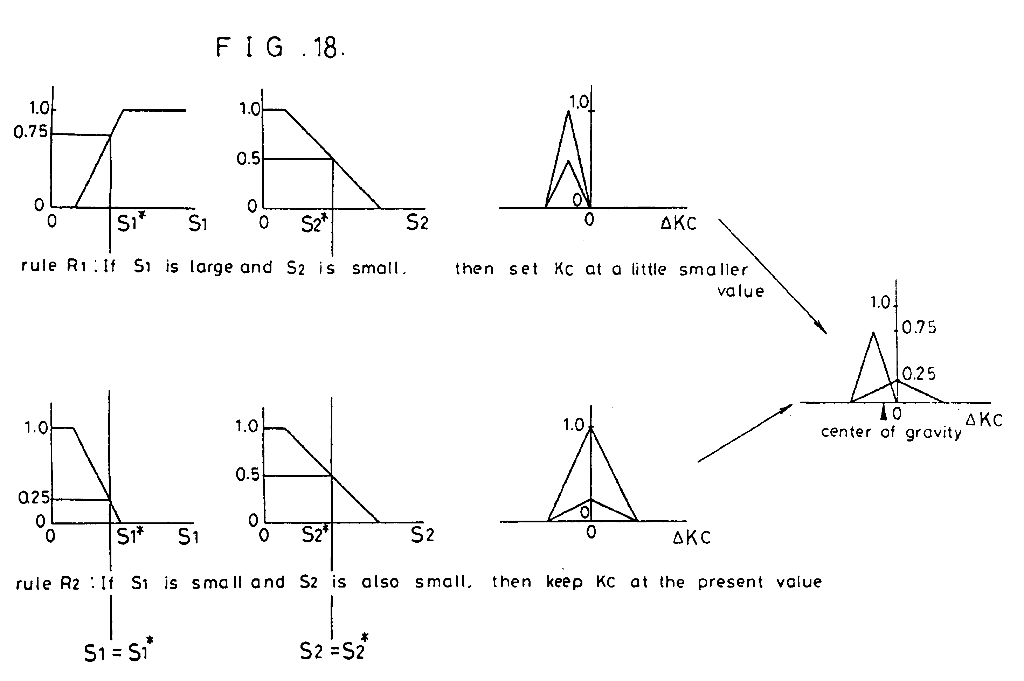

Figure 18 shows the mechanism of the velocity type fuzzy reasoning. Herein, as the characteristics variable Sᵢ the S₁ and S₂ ... represented by the formulae (20) and (21) and shown in Figure 11 are used. That is, a pulse response of the controlled system 3 is utilized similarly as in the third embodiment R₁ and R₂ which are described below are used as the reasoning rules.
Rᵢ : "If S₁ is large and S₂ is small, then set the gain K_{c} at a little smaller value."
R₂: "If S₁ is small and S₂ is also small, then keep the gain K_{c} at the present value."

At first, it is evaluated to how much degree the present state satisfies with the condition of the former part proposition of the fuzzy reasoning rule. Herein, it is assumed that the values of S₁ and S₂ are actually such that Sᵢ = S₁* and S₂ = S₂^{*.} These values are evaluated by the membership functions. For example, with respect to the reasoning rule R₁, the propositions "If S₁ is large" and "If S₂ is small" are evaluated to be satisfied with to the degree of 0,75 and 0.5, respectively, as shown in the left side two graphs at the upper stage of Figure 18. It is judged that the entirety of the former part proposition of the rule R₁ is satisfied with to the degree of 0,5 from the lower value among them.

Next, the membership function of the latter part proposition "then set K_{c} at a little small value" is weighted by the degree to that the former part proposition comes into existence. This manner is shown in the third from the left graph at the upper stage of Figure 18.

The above-described operations are conducted with respect to the respective rule Rⱼ, and finally the weighted membership functions of the latter part propositions of the respective rules are put one upon another. Thereafter, the center of gravity of them is calculated, and this calculated center of gravity is adopted as the optimum gain adjustment variable ΔK_{c}.

The reasonings are also conducted for the integration time and the differentiation time similarly as above, and the velocity type fuzzy reasoner 12 outputs the respective optimum adjustment variables ΔT_{I} and ΔT_{D}.

The optimum control parameter adjustment variables ΔK_{c}, ΔT_{I}, and ΔT_{D} are given to the controller 4 through the integrators 413 as actual control parameters, that is, K_{c}, T, and T_{D}.

In the above illustrated embodiments auto-tuning controllers which automatically adjust the gain, the integration time, and the differentiation time with using a PID controller, but the present invention can be also applied to the other type of auto-tuning controller, for example, the present invention can be applied to an auto-tuning controller which includes a controller which, including an ON, OFF, and unsensitive zone, automatically adjusts the width of the unsensitive zone. The present invention can be also applied to an auto-tuning controller which includes an optimum control controller which, based on the modern ages control theory, automatically adjusts the parameters of the evaluation function.

As is evident from the foregoing description, according to the present invention, the control parameters of the controller are fuzzy reasoned from the characteristics variables of the waveforms such as the input error or the controlled system response in accordance with the reasoning rules which are obtained from the experience rules and perceptions of human beings and previously stored, whereby the automatic adjustments of the control parameters can be conducted by simple operations of membership functions without conducting the identification which unfavourably restricts the type of the controlled system and which is also a complicated one. This enables of conducting an automatic adjustment at a light operation load and at a short time, and of conducting an automatic adjustrnent against a wide range of controlled system.

## Claims

1. Control apparatus for controlling a system, comprising:
a controller (4) operable to process an error signal (e(K)) to produce a control signal (u(K)) for input to the controlled system (3) for controlling the system; a reference signal generator (1); means for deriving said error signal (e(K)) from the reference signal (r(K)) and a controlled variable signal (y(K)) produced by said controlled system (3) in response to the application thereto of said control signal (u(K)); and
means (10) for adjusting at least one control parameter of said controller (4);
characterised by:
means for automatically adjusting said at least one parameter prior to said controller conducting control operations on said system, for tuning the controller to the characteristics of the controlled system, said automatic adjustment means comprising:
(a) means for creating a change (step 121, 142, 153, 144 or 155) in the input to the controlled system to produce a transient response (Fig. 7, Fig. 11) in said controlled variable signal (y(K));
(b) a reasoning rule memory (9) having stored therein fuzzy reasoning rules relating to changes to be made to the value of said at least one parameter as a function of the transient response in said controlled variable signal (y(K)) during a predetermined period (N) following creating a said change;
(c) a characteristics variable extractor (8) that is operable
(i) to sample an error waveform signal ((e): figs. 7(b), 11 (b)), indicative of the operation of the controlled system (3), to produce a multiplicity of samples (e(K) K=1 to N, ep_{eak;} e(K) K=1 to N, epᵢ, i=1,2,3) of the error waveform signal (e), and
(ii) to produce from said waveform samples obtained during a said predetermined period (N) following creating a said change a plurality of extracted characteristics variables (S, i=1,2,...), the values of said characteristics variables thus being dependent upon the transient response characteristics of the controlled system (3); and
(d) a fuzzy reasoner (10, 311, 412) operable to receive said extracted characteristics variables and to apply said fuzzy reasoning rules to said extracted characteristics variables and, in accordance therewith, to automatically define said adjustment of said at least one parameter.

2. An apparatus (fig. 1, 5, 9) as claimed in claim 1 wherein said fuzzy reasoner (10) is a position type fuzzy reasoner.

3. An apparatus (fig. 13; fig.16) as claimed in claim 1 wherein said fuzzy reasoner (311; 412) is a velocity type fuzzy reasoner, said apparatus including integrating means (312; 413) for integrating the output of the fuzzy reasoner (311; 412) to adjust the or each control parameter (K_{c},T,, T D).

4. An apparatus (fig. 1, 13, 16) as claimed in claim 1 wherein said characteristics variables extractor (8) is operable to produce a multiplicity of waveform samples (e(K)) taken at regular intervals and to produce from these samples (e(K)) both a mean error (Eq.(14)) as one characteristics variable (Sᵢ) and a mean error change rate (Eq.(15)) as another characteristics variable (S₂).

5. An apparatus (fig.5; fig.9) as claimed in claim 1 wherein said characteristics variables extractor (8) is operable to produce both a multiplicity of waveform samples (e(K)) taken at regular intervals and also waveform samples (epeak; ₑpi, i=1,2,3) taken at peak value to produce from these samples, respectively, both a mean error (Eq(14)) as one characteristics variable (S₁; S₂) and a variable dependant on either a peak value (fig. 5: Eq (18)) or an averaged ratio of successive peak values (fig.9: Eq(20)) as another characteristics variable (S₂; Sᵢ).

6. An apparatus (fig. 1, 9, 13, 16) as claimed in claim 1 wherein the characteristics variables extractor (8) is operable to sample an error waveform signal (e) taken from a point in the apparatus that is external to the characteristics variables extractor (8).

7. An apparatus (figs. 1, 13) as claimed in claim 6 wherein the error waveform signal (e) used by the characteristics variables extractor (8) is formed from the difference of said controlled variable signal (y) and said reference value signal (r), said apparatus including a subtraction means (-) preceding the controller

(4) for receiving the controlled variable signal (y) and the reference value signal (r) and having its output applied to both the controller (4) and the characteristics variable extractor(s), said subtraction means thus constituting said means for deriving said error signal.

8. An apparatus (fig. 9; fig. 16) as claimed in claim 6 wherein the error waveform signal (e) used by the characteristics variable extractor (8) is formed from the difference of the controlled variable signal (y) and a test signal (T), said apparatus including a test signal generator (209; 409) for generating the test signal (T), a switch (208; 408) connected to the reference value signal generator (1) and to the test signal generator (209; 409) for selecting either the reference value signal (r) or the test signal (T) and a subtraction means (-) connected between the switch (208; 408) and the controller (4) which subtraction means also is to receive the controlled variable signal (y) to produce the error waveform signal (e) for the characteristics variable extractor (8) and to produce said error signal formed from the difference of the controlled variable signal (y) and the reference value signal (r) for control of the system (3), said subtraction means thus constituting saids means for deriving said error signal.

9. An apparatus (fig. 5) as claimed in claim 1 wherein the characteristics variables extractor (8) is operable to sample an error waveform signal (e) produced therein from signals (y, T) taken from points in the apparatus that are external to the characteristics variables extractor (8).

10. An apparatus (fig. 5) as claimed in claim 9 wherein the error waveform signal (e) is produced from the difference of a controlled variable signal (y) and a test signal (T),
said apparatus including a test signal generator (109) for generating the test signal (T) and a switch (108) connected to an output of the controller (4) and to the test signal generator (109) to select either the test signal (T) or said control signal (u) for application to the controlled system (3).

## Patentansprüche

1. Regeleinrichtung zur Regelung eines Systems. mit
- einem Regler (4), der ein Fehlersignal (e(K)) verarbeitet, um ein Regelsignal (u(K)) zu erzeugen, welches dem geregelten System (3) zur Regelung des Systems zugeführt wird;
- einem Referenzwertsignalgenerator (1);
- Mitteln zur Erzeugung des Fehlersignals (e(K)) aus dem Referenzsignal (r(K)) und einem geregelten variablen Signal (y(K)), das durch das geregelte System (3) in Antwort auf das ihm zugeführte Regelsignal (u(K)) erzeugt wird; und
- Mitteln (10) zur Einstellung wenigstens eines Steuerparameters des Reglers (4); gekennzeichnet durch:
- Mittel zur automatischen Einstellung des wenigstens einen Parameters, bevor der Regler die Regeloperationen bezüglich des Systems durchführt, um den Regler auf die Charakteristika des geregelten Systems abzustimmen, wobei die automatischen Einstellmittel folgendes enthalten:
a) Mittel zum Kreieren einer Änderung (Schritt 121, 142, 153, 144 oder 155) im Eingang zum geregelten System zwecks Erzeugung einer Übergangsantwort (Figur 7, Figur 11) im geregelten variablen Signal (y(K));
b) einen Schlußfolgerungsregel-Speicher (9), in welchem Fuzzy-Schlußfolgerungsregeln gespeichert sind, die sich auf durchzuführende Änderungen des Wertes des wenigstens einen Parameters als Funktion der Übergangsantwort im geregelten variablen Signal (y(K)) während einer vorbestimmten Periode (N) beziehen, die der Kreierung einer derartigen Änderung folgt;
c) eine Extrahiereinrichtung (8) für charakteristische Variable, die
i) eine Fehlersignalwellenform ((e): Figuren 7(b), 11(b)) abtastet, welche den Betrieb des geregelten Systems (3) beschreibt, um eine Vielzahl von Proben (e(K) K=1 bis N, ep_{eak;} e(K) K=1 bis N, epₗ, i= 1, 2, 3) der Fehlersignalwellenform (e) zu erzeugen, und die
ii) anhand der Wellenformproben, die während der vorbestimmten Periode (N) nach Kreierung der Änderung erhalten wurden, eine Vielzahl von extrahierten charakteristischen Variablen (S₁, i= 1,2, ...) erzeugt, wobei die Werte dieser charakteristischen Variablen von der Übergangsantwortcharakteristik des geregelten Systems (3) abhängen; und
d) eine Fuzzy-Schlußfolgerungseinrichtung (10, 311, 412), die die extrahierten charakteristischen Variablen empfängt und die Fuzzy-Schlußfolgerungsregeln auf diese extrahierten charakteristischen Variablen anwendet, um in Übereinstimmung damit automatisch die Einstellung des wenigstens einen Parameters zu definieren.

2. Regeleinrichtung (Figuren 1, 5, 9) nach Anspruch 1, dadurch gekennzeichnet, daß die Fuzzy-Schlußfolgerungseinrichtung (10) eine solche vom Positionierungstyp ist.

3. Regeleinrichtung (Figur 13; Figur 16) nach Anspruch 1, dadurch gekennzeichnet, daß die Fuzzy-Schlußfolgerungseinrichtung (311; 412) eine solche vom Geschwindigkeitstyp ist, wobei die Regeleinrichtung ferner Integrationsmittel (312; 413) zum Integrieren des Ausgangs der Fuzzy-Schlußfolgerungseinrichtung (311; 412) aufweist, um die oder jeden Regelparameter (K_{c}, T, T_{D}) einzustellen.

4. Regeleinrichtung (Figuren 1, 13, 16) nach Anspruch 1, dadurch gekennzeichnet, daß mit der Extrahiereinrichtung (8) eine Vielzahl von Wellenformproben (e(K)) in regulären Intervallen sowie anhand dieser Proben ein mittlerer Fehler (Eq. (14)) als eine charakteristische Variable (S₁) sowie eine mittlere Fehler- änderungsrate (Eq. (15)) als eine andere charakteristische Variable (S₂) erzeugbar sind.

5. Regeleinrichtung (Figur 5; Figur 9) nach Anspruch 1, dadurch gekennzeichnet, daß mit der Extrahiereinrichtung (8) sowohl eine Vielzahl von Wellenformproben (e(K)) in regulären Intervallen als auch Wellenformproben (epeak; ₑpi, i= 1, 2, 3) an Spitzenwerten erzeugbar sind, um jeweils von diesen Proben sowohl einen mittleren Fehler (Eq. (14)) als eine charakteristische Variable (S₁ ; S₂) als auch eine Variable als andere charakteristische Variable (S₂ ; S₁) zu erzeugen, die entweder von einem Spitzenwert (Figur 5 : Eq. (18)) oder von einem mittleren Verhältnis aufeinanderfolgender Spitzenwerte (Figur 9: Eq. (20)) abhängt.

6. Regeleinrichtung (Figuren 1. 9, 13, 16) nach Anspruch 1, dadurch gekennzeichnet, daß mit der Extrahiereinrichtung (8) eine Fehlersignalwellenform (e) abtastbar ist, die von einem Punkt im Regler abgenommen wird, welcher außerhalb der Extrahiereinrichtung (8) liegt.

7. Regeleinrichtung (Figuren 1, 13) nach Anspruch 6, dadurch gekennzeichnet, daß die durch die Extrahiereinrichtung (8) verwendete Fehlersignalwellenform (e) anhand der Differenz zwischen dem geregelten variablen Signal (y) und dem Referenzwertsignal (r) gebildet wird, und daß ferner vor dem Regler (4) liegende Subtraktionsmittel (-) vorhanden sind, die das geregelte variable Signal (y) und das Referenzwertsignal (r) empfangen, und deren Ausgang sowohl mit dem Regler (4) als auch mit der Extrahiereinrichtung (8) verbunden ist, wobei die Subtraktionsmittel die Mittel zur Erzeugung des Fehlersignals bilden.

8. Regeleinrichtung (Figur 9; Figur 16) nach Anspruch 6, dadurch gekennzeichnet, daß die durch die Extrahiereinrichtung (8) verwendete Fehlersignalwellenform (e) anhand der Differenz zwischen dem geregelten variablen Signal (y) und einem Testsignal (T) gebildet wird. wobei der Regler
- einen Testsignalgenerator (209; 409) zur Erzeugung des Testsignals (T).
- einen mit dem Referenzwertsignalgenerator (1) und dem Testsignalgenerator (209; 409) verbundenen Schalter (208; 408) zur Auswahl entweder des Referenzsignals (r) oder des Testsignals (T) sowie
- Subtraktionsmittel (-) zwischen dem Schalter (208; 408) und dem Regler (4) aufweist, und wobei die Subtraktionsmittel einerseits das geregelte variable Signal (y) empfangen, um die Fehlersignalwellenform (e) für die Extrahiereinrichtung (8) zu erzeugen, und andererseits das Fehlersignal aus der Differenz zwischen dem geregelten variablen Signal (y) und dem Referenzwertsignal (r) erzeugen, um das System (3) zu regeln, wobei die Subtraktionsmittel die Mittel zur Erzeugung des Fehlersignals bilden.

9. Regeleinrichtung (Figur 5) nach Anspruch 1, dadurch gekennzeichnet, daß mit der Extrahiereinrichtung (8) eine Fehlersignalwellenform (e) abtastbar ist, die durch Signale (y, T) gebildetwird, welche an Punkten außerhalb der Extrahiereinrichtung (8) abgenommen werden.

10. Regeleinrichtung (Figur 5) nach Anspruch 9, dadurch gekennzeichnet, daß die Fehlersignalwellenform (e) anhand der Differenz zwischen einem geregelten variablen Signal (y) und einem Testsignal (T) gebildetwird, wobei sie einen Testsignalgenerator (109) zur Erzeugung des Testsignals (T) und einen Schalter (108) enthält, der mit einem Ausgang des Reglers (4) und dem Testsignalgenerator (109) verbunden ist, um entweder das Testsignal (T) oder das Regelsignal (u) zum geregelten System (3) übertragen zu können.

## Revendications

1. Appareil de commande destiné à commander un système comprenant :
un dispositif de commande (4) apte à traiter un signal d'erreur (e(K)) pour produire un signal de commande (u(K)) pour l'entrée au système commandé (3) pour la commande du système ;
un générateur de signal de référence (1) ;
des moyens pour dériver le signal d'erreur (e(K)) du signal de référence (r(K)) et un signal variable commandé (y(K)) produit par le système commandé (3) en réponse à l'application sur celui-ci du signal de commande (u(K)) ; et
des moyens (10) pour régler au moins un paramètre de commande de l'organe de commande (4) ;
caractérisé par :
des moyens pour ajuster au moins un paramètre avant que le système de commande n'effectue les opérations de commande sur le système, pour ajuster l'organe de commande aux caractéristiques du système commandé, ces moyens de réglage automatiques comprenant :
a) des moyens pour créer une modification (étape 121,142,153,144 ou 155) dans l'entrée du système commandé pour produire une réponse transitoire (Figure 7, Figure 11) dans le signal variable commandé (y(K)) ;
b) une mémoire de règle de raisonnement (9) dans laquelle sont mémorisées les règles de raisonnement lâche par rapport aux modifications à effectuer sur la valeur d'au moins un paramètre en fonction de la réponse transitoire dans le signal de variable commandé (y(K)) pendant une période pré-déterminée (N) suivant la création d'une modification ;
c) un extracteur variable de caractéristiques (8) qui est apte
(i) à échantillonner un signal de forme donc d'erreur ((e): Figures 7(b), 11(b)), indicatif du fonctionnement du système commandé (3), pour produire une multiplicité d'échantillons (e(K) K=1 à N, e_{crête}; e(K) k=1 à N, epᵢ, i=1,2,3) du signal de forme d'onde d'erreur (e), et
(ii) à produire à partir des échantillons de forme d'onde obtenus au cours de la période prédéterminée (N) suivant la création d'une modification, une pluralité de variables caractéristiques extraites (Si, i=1,2...), les valeurs de ces variables caractéristiques étant alors fonction des caractéristiques de réponse transitoire du système commandé (3) et
d) un organe de raisonnement lâche (10, 311,412) opérant pour recevoir les variables caractéristiques extraites et pour appliquer les règles de raisonnement lâche aux variables caractéristiques extraites et, conformément à cela, pour définir automatiquement l'ajustement d'au moins un paramètre.

2. Un appareil (figures 1, 5, 9) selon la revendication 1, dans lequel le dispositif de raisonnement lâche (10) est un dispositif de raisonnement lâche de type "position".

3. Un appareil (figures 13,16) selon la revendication 1, dans lequel le dispositif de raisonnement lâche (311, 412) est un dispositif de raisonnement lâche de type "vitesse", cet appareil comprenant des moyens d'intégration (312, 413) pour intégrer le signal de sortie du dispositif de raisonnement lâche (311, 412) dans le but de régler le paramètre de commande ou chacun d'eux (K_{c}, T, T D).

4. Un appareil (figures 1, 13, 16) selon la revendication 1, dans lequel l'extracteur de variables de caractéristiques (8) est capable de produire un ensemble d'échantillons de forme d'onde (e(K)) prélevés à des intervalles réguliers, et de produite à partir de ces échantillons (e(K)) à la fois une erreur moyenne (équation (14)) constituant une variable de caractéristiques (Si), et un taux de variation moyen de l'erreur (équation (15)) constituant une autre variable de caractéristiques (S₂).

5. Un appareil (figures 5, 9) selon la revendication 1, dans lequel l'extracteur de variables de caractéristiques (8) est capable de produire à la fois un ensemble d'échantillons de forme d'onde (e(K)) prélevés à des intervalles réguliers, et des échantillons de forme d'onde (e_{crête}; eₚᵢ, i=1,2,3) prélevés à une valeur de crête, pour produire respectivement à partir de ces échantillons, à la fois une erreur moyenne (équation (14)) constituant une variable de caractéristiques (S₁; S₂), et une variable qui dépend soit d'une valeur de crête (figure 5 : équation (18)), soit d'un rapport moyen de valeurs de crête successives (figure 9 : équation (20)), constituant une autre variable de caractéristiques (S₂; Si).

6. Un appareil (figures 1, 9, 13, 16) selon la revendication 1, dans lequel l'extracteur de variables de caractéristiques (8) est capable d'échantillonner un signal de forme d'onde d'erreur (e) qui est extrait d'un point dans l'appareil qui est extérieur à l'extracteur de variables de caractéristiques (8).

7. Un appareil (figures 1, 13) selon la revendication 6, dans lequel le signal de forme d'onde d'erreur (e) qui est utilisé par l'extracteur de variables de caractéristiques (8), est formé à partir de la différence entre un signal de variable commandée (y) et un signal de valeur de référence (r), cet appareil comprenant des moyens de soustraction (-) qui précèdent le dispositif de commande (4), et qui sont destinés à recevoir le signal de variable commandée (y) et le signal de valeur de référence (r) et dont le signal de sortie est appliqué à l'organe de commande (4) et à l'extracteur de variables de caractéristiques (5), le soustracteur constituant ainsi le moyen pour dériver le signal d'erreur.

8. Un appareil (figures 9,16) selon la revendication 6, dans lequel le signal de forme d'onde d'erreur (e) qui est utilisé par l'extracteur de variables de caractéristiques (8), est formé à partir de la différence entre un signal de variable commandée (y) et un signal de test (T),
cet appareil comprenant un générateur de signal de test (209, 409) qui est destiné à générer un signal de test (T), un commutateur (208, 408) qui est connecté au générateur de signal de valeur de référence (1) et au générateur de signal de test (209, 409) pour sélectionner soit le signal de valeur de référence (r), soit le signal de test (T), et des moyens de soustraction (-) qui sont connectés entre le commutateur (208,408) et le dispositif de commande (4) les moyens de soustraction recevant également le signal de variable commandée (y), pour produire le signal d'erreur (e) pour l'extracteur de variables de caractéristiques (8), et un autre signal de forme d'onde d'erreur qui est formé à partir de la différence entre le signal de variable commandé (y) et le signal de valeur de référence (r) pour la commande du système (3), ces moyens de soustraction constituant ainsi des moyens pour dériver le signal d'erreur.

9. Un appareil (figure 5) selon la revendication 1, dans lequel l'extracteur de variables de caractéristiques (8) est capable d'échantillonner un signal de forme d'onde d'erreur (e) qui est produit à l'intérieur, à partir de signaux (y, T) qui sont extraits de points dans l'appareil qui sont extérieurs à l'extracteur, de variables de caractéristiques (8).

10. Un appareil (figure 5) selon la revendication 9, dans lequel le signal de forme d'onde d'erreur (e) est produit à partir de la différence entre un signal de variable commandée (y) et un signal de test (T),
cet appareil comprenant un générateur de signal de test (109) qui est destiné à générer le signal de test (T) et un commutateur (108) qui est connecté à une sortie du dispositif de commande (4) et au générateur de signal de test (109), pour sélectionner soit le signal de test (T), soit un signal de commande (u), pour l'application au système commandé (3).
